# EUROPÄISCHE PATENTSCHRIFT

(11) **EP 4 047 194 B1**
(45) Veröffentlichungstag und Bekanntmachung des Hinweises auf die Patenterteilung: **14.05.2025**
(21) Anmeldenummer: 22155402.5
(22) Anmeldetag: 07.02.2022
(51) Int. Cl.: F01N 3/027, F01N 3/20, F01N 13/18, H05B 3/06

(54) **HALTER FÜR EINE ELEKTRISCHE HEIZSCHEIBE IN EINER ABGASNACHBEHANDLUNGSVORRICHTUNG**
HOLDER FOR AN ELECTRIC HEATING DISC IN AN EXHAUST GAS AFTERTREATMENT DEVICE
SUPPORT POUR UN DISQUE DE CHAUFFAGE ÉLECTRIQUE DANS UN DISPOSITIF DE TRAITEMENT ULTÉRIEUR DES GAZ D'ÉCHAPPEMENT

(30) Priorität: 11.02.2021 DE 102021103283
(43) Veröffentlichungstag der Anmeldung: 24.08.2022
(73) Patentinhaber: Benteler Automobiltechnik GmbH, 33102 Paderborn (DE)
(72) Erfinder: Grußmann, Elmar, 33184 Altenbeken (DE); Rusche, Ulrich, 59457 Werl (DE)
(74) Vertreter: Osterhoff, Utz

(56) Entgegenhaltungen:
- EP-A1- 3 964 696
- WO-A1-2010/122005
- DE-U1- 202020 104 976
- JP-U- S6 078 918

## Beschreibung

Die vorliegende Erfindung betrifft eine Abgasbehandlungsvorrichtung in einem Abgasstrang eines Kraftfahrzeuges gemäß den Merkmalen im Oberbegriff von Anspruch 1.

Um der Gesetzgebung und Markt- bzw. Kundenerwartungen zu entsprechen, werden Verbrennungsmotoren heutzutage auf höchste Effizienz getrimmt und produzieren so wenig Abwärme wie möglich.

Im Widerspruch dazu steht eine schnelle Aufheizung der Abgaskomponenten nach dem Kaltstart und das Halten dieses Temperaturbereichs während den gängigen Testzyklen, um optimale Reaktionsbedingungen für die Umsetzung von schädlichen Abgasbestandteilen in nicht schädliche Elemente zu gewährleisten.

Dieser Light-Off beginnt bei Katalysatoren ab ca. 180°C, die Reaktionsgeschwindigkeit steigt mit der Temperatur. Da kommende Zulassungsbeschränkungen die Abgaszusammensetzung direkt nach Kaltstart beurteilen, sollte die Light-Off Temperatur schnellstmöglich erreicht werden.

Hierzu werden Heizelemente eingesetzt, welche ein aktives Thermomanagement der Abgasanlage innerhalb gewisser Grenzen erlauben. Diese sind aktuell meist aus Dünnblechwabenstrukturen (Finnenstrukturen) spiralförmig gewickelt. Die Trennung der Leiter (Wabenstränge) wird durch einen Luftspalt sichergestellt. Durch Hochtemperaturlöten wird der Gesamtaufbau versteift. Die elektrische Isolierung der gesamten Heizmatrix erfolgt meistens über Keramikstifte (Support-Pins), wobei diese in den Katalysatorkörper eingeschoben werden.

Aus der vorangemeldeten, jedoch nachveröffentlichten EP 3 964 696 A1 ist ein Abgashalter für eine Abgasanlage bekannt, bei dem im Längsschnitt wellenförmig verlaufende Speichen, beide umlaufend regelmäßig angeordnet sind.

Aus der DE 20 2020 104 976 U1 ist ein elektrisches Heizaggregat bekannt, bei dem mechanisch angeschlossene Trägerstruktur gegenüber einer Einfassung elektrisch isoliert angeordnet ist.

Aufgabe der vorliegenden Erfindung ist es, ausgehend vom Stand der Technik eine Heizvorrichtung in einem Abgasstrang anzuordnen, welche kostengünstig und einfach produzierbar ist, gleichzeitig eine hoch effiziente Heizleistung bereitstellt und insbesondere eine hohe thermische Resistenz aufweist.

Die zuvor genannte Aufgabe wird erfindungsgemäß mit einer Abgasbehandlungsvorrichtung zur Anordnung in einem Abgasstrang eines Kraftfahrzeuges mit den Merkmalen im Anspruch 1 gelöst.

Vorteilhafte Ausgestaltungsvarianten sind Gegenstand der abhängigen Ansprüche.

Die vorliegende Erfindung betrifft eine Abgasbehandlungsvorrichtung zur Anordnung in einem Abgasstrang eines Kraftfahrzeuges. Dieses Kraftfahrzeug weist einen Verbrennungsmotor auf. Der Verbrennungsmotor kann beispielsweise ein Diesel-oder Ottomotor sein. Auch kann es sich um ein Hybridkraftfahrzeug handeln, welches einen zusätzliches Verbrennungsmotor aufweist. Es handelt sich bei der Abgasbehandlungsvorrichtung somit um eine Abgasnachbehandlungsvorrichtung.

Das Kraftfahrzeug weist einen Abgasstrang auf. In dem Abgasstrang ist eine Abgasnachbehandlungskomponente, insbesondere in Form eines Katalysators angeordnet. Dem Katalysator ist in Abgasströmungsrichtung in dem Abgasstrang vor- bzw. nachgeschaltet eine Heizscheibe. Die Heizscheibe dient zur elektrischen externen Aufheizung des Katalysators, beispielsweise während der Kaltstartphase.

Die Heizscheibe selbst ist durch ein flächiges Heizelement ausgebildet. Dies kann eine Heizwendel oder auch eine Wabenanordnung sein. Insbesondere ist das Heizelement eine elektrische Widerstandsheizung, die sich beim Beaufschlagen mit einem elektrischen Strom in kürzester Zeit aufheizt und dann über Strahlung und/oder Konvektion den Katalysator aufheizt. Das Heizelement bzw. die Heizscheibe kann auch aus einem Lochblech oder einem Drahtgewebe bzw. Drahtgeflecht hergestellt sein. Die Heizscheibe selbst muss nicht als einteiliger flächiger Körper ausgebildet sein, es kann auch ein spiralförmig gewundener Heizleiter sein, der dann jedoch in der Ebene einer Scheibe angeordnet ist. Der Heizleiter selbst ist dann entweder massiv ausgebildet oder kann auch aus einem porösen Material, beispielsweise aus einem Drahtgeflecht ausgebildet sein. Bei dem Drahtgeflecht handelt es sich um ein Drahtgewebe bzw. ein Lochblech. Dies bietet weiterhin den Vorteil, dass das Heizelement nicht nur umströmt werden kann, sondern auch durch die jeweilige Porösität des Heizleiters hindurchgeströmt werden kann.

Damit das elektrische Heizelement in dem Abgasstrang angeordnet ist, ist erfindungsgemäß ein Halter vorgesehen. Das elektrische Heizelement ist mit dem Halter gekoppelt. Der Halter erstreckt sich mindestens über die Querschnittsfläche des Heizelementes.

Erfindungsgemäß ist der Halter radial umlaufend größer ausgebildet als das Heizelement selber. Der Halter kann somit in einem Gehäuse der Abgasnachbehandlungsvorrichtung angeordnet werden, insbesondere mit einer Innenmantelfläche gekoppelt werden. Der Halter hält dann das Heizelement von der Innenmantelfläche des Gehäuses beabstandet, bezogen auf die Radialrichtung.

Damit der Halter auch axial beabstandet das Heizelement selbst halten kann, ist der Halter selbst als scheibenförmiges, flächiges Element ausgebildet. Damit jedoch das Abgas durch den Halter hindurchströmen kann, ist der Halter selbst nicht als dichte Scheibe ausgebildet, sondern weist eine spinnennetzartige bzw. gitterartige Struktur auf. Diese Struktur ist erfindungsgemäß dadurch ausgebildet, dass die auf die Radialrichtung bezogene Innenfläche des Halters bzw. der Scheibenform des Halters, durch bogenförmig verlaufende miteinander gekoppelte Speichen ausgebildet ist. Diese bogenförmigen Speichen folgen dabei einer Splinefunktion bzw. haben einen kurvenförmigen Verlauf. Die Bogenform der einzelnen Speichen bewirkt die besondere thermomechanische Festigkeit des Halters. Mithin werden Ausdehnungen bzw. Kontraktionen aufgrund unterschiedlicher Temperaturbereiche aufgrund der Bogenform bestmöglich kompensiert.

Die Heizscheibe ist dann über einzelne Koppelpunkte oder Haltepunkte mit dem Halter gekoppelt. Durch die gute thermomechanische Festigkeit erfahren somit die Befestigungspunkte eine nur geringe Positionsänderung aufgrund von Ausdehnungen oder Kontraktionen, was sich wiederum auch auf die thermomechanische Festigkeit des mit dem Halter gekoppelten Heizelement auswirkt.

Eine Speiche muss im Sinne der Erfindung nicht von einem außen umlaufenden Rahmen oder Kontur radial nach innen zu einer Nabe laufen. Eine Speiche im Sinne der Erfindung ist eine in den Innenbereich verlaufende Verbindung. Eine radiale nach innen verlaufende Orientierung bedeutet nicht geradlinig nach innen verlaufend, sondern dass die Speiche generell eine Orientierung zu einem radial gerichteten Innenraum des scheibenförmigen Körpers aufweist.

Die Speichen verbinden sich somit zu einem im Wesentlichen unregelmäßigen Stützgitter und ermöglichen es somit, Verbindungspunkte über die gesamte Querschnittsfläche des Heizleiters zu schaffen. Gleichzeitig ist der Strömungswiderstand äußerst gering, da die Speichen, bezogen auf den gesamten Querschnitt des Gehäuses der Abgasnachbehandlungskomponente weniger als 20 %, insbesondere weniger als 15 % und ganz besonders bevorzugt weniger als 10 % der Querschnittsfläche bedecken. In dem Halter sind große Ausschnittsflächen vorhanden, so dass das Abgas nahezu in zu vernachlässigender Weise im Strömungswiderstand gesteigert durch den Halter und das Heizelement strömen kann. Die Zwischenbereiche zwischen den Speichen sind somit strömungsoffen ausgebildet bzw. ausgeschnitten.

Der Halter kann beispielsweise als Stanzbauteil oder auch als ausgeschnittenes Bauteil durch ein Lasertrennverfahren oder ähnliches aus einem metallischen Werkstoff, insbesondere aus einem abgasresistenten Edelstahlwerkstoff hergestellt sein, insbesondere kommt hier ein ferritischer oder austenitischer Werkstoff zum Einsatz.

Besonders bevorzugt sind jeweils zwei benachbarte Speichen, die zueinander gegenläufig, bezogen auf die Bogenform, verlaufen. Dies kann die thermische Resistenz aufgrund unterschiedlicher Ausdehnungsverhalten nochmals weiter verbessern.

Damit nunmehr das Heizelement mit dem Halter gekoppelt ist, sind Abstandshalter vorgesehen. Hierbei handelt es sich insbesondere um Keramikhülsen. Die Keramikhülsen haben den Vorteil, dass diese thermisch resistent und elektrisch nicht leitend ausgebildet sind. Besonders bevorzugt wird dann ein Stift die Keramikhülsen durchgreifend mit dem Halter und dem Heizelement gekoppelt. Somit ist das Heizelement axial beabstandet von dem Halter formschlüssig lagefixiert angeordnet, gleichzeitig auch elektrisch isoliert. Bei Beaufschlagung des Heizelementes mit einem elektrischen Strom kommt es somit nicht zu einem Kurzschluss mit dem Gehäuse der Abgasnachbehandlungskomponente.

In einer weiteren bevorzugten Ausgestaltungsvariante sind die Stifte, welche auch Befestigungsstifte genannt werden können, unter einer Vorspannung angeordnet. Die Vorspannung wird insbesondere erreicht, indem die Stifte punktgeschweißt werden. Bei Umgebungstemperatur wird somit erreicht, dass während des Schweißvorganges eine hohe thermische Einwirkung stattfindet und die Stifte formschlüssig verschweißt sind. Kühlt nunmehr der Stift ab, kontrahiert sich der Stift und spannt somit Halter und Heizscheibe, gekoppelt über die keramische Abstandshülse vor. Ein loser Sitz, Klappern oder auch thermische Spannung oder Ausdehnungen werden somit sichergehend vermieden.

Der vorgenannte Effekt kann besonders bevorzugt dadurch verbessert werden, dass zwei Befestigungsstifte von entgegengesetzten Seiten, also aufeinander zugerichtet, eingesetzt werden. Diese Stifte werden dann an den sich berührenden Spitzen miteinander gekoppelt, insbesondere verschweißt. Überschüssiges Material schmilzt auf und die axiale Länge, der sich zwei ergebenden Stifte entspricht dann am Ende des Schweißvorganges dem Abstand von Heizscheibe, Abstandshülse und Halter. Es wird eine Passung hergestellt. Nach dem Schweißvorgang kontrahiert sich das Material, so dass die zwei miteinander gekoppelten Stifte in ihrer Axialrichtung sich kontrahieren und somit die Heizscheibe über den Abstandshalter in Form der Keramikbuchse an den Halter koppeln, wobei die Stifte unter einer Vorspannung bzw. Zugspannung stehen. Bei einem späteren Erwärmen im Betrieb, also Abgas strömt, führt somit eine Ausdehnung der Stifte aufgrund der Vorspannung nicht zu einem Klappern bzw. losen Halten. Die Lebensdauer der Halterung wird somit erhöht.

Die Speichen selbst sind bevorzugt einstückig und werkstoffeinheitlich in dem Halter ausgebildet.

Der Halter selbst kann in einer weiter bevorzugten Ausgestaltungsvariante auch selbst mehrlagig ausgebildet sein. Hierbei gibt es dann bevorzugt drei Blechlagen. Zwei äußere Blechlagen sind als jeweiliges Klemmblech oder Halterblech ausgebildet. Eine mittlere Blechlage ist als Distanzblech ausgebildet. Eine jeweilige Keramikhülse kann somit mit einem Bund in eine Öffnung des Distanzbleches eingelegt werden. Ein in Axialrichtung vorgeschaltetes Klemmblech fixiert dann den Bund der Distanzhülse in dem Halter selber. Die einzelnen Lagen können miteinander gekoppelt werden, insbesondere stoffschlüssig, beispielsweise durch einen Lötvorgang oder auch einen Schweißvorgang.

In einer weiteren bevorzugten Ausgestaltungsvariante ist das Heizelement sandwichartig zwischen zwei Haltern, bezogen auf die Abgasströmungsrichtung, angeordnet. Dies bedeutet, ein Halter ist dem Heizelement in Abgasströmungsrichtung vorgeschaltet und ein weiterer Halter dem Heizelement in Abgasströmungsrichtung nachgeschaltet. Bezogen auf die Axialrichtung ist das Heizelement somit optimal gehalten, selbst bei hohen Strömungsgeschwindigkeiten des durch die Abgasnachbehandlungskomponente strömenden Abgases.

Weitere Vorteile, Merkmale und Eigenschaften der vorliegenden Erfindung sind Gegenstand der nachfolgenden Beschreibung. Vorteilhafte Ausgestaltungsvarianten werden in schematischen Figuren dargestellt. Diese dienen dem einfachen Verständnis der Erfindung.
- Figur 1: eine Explosivdarstellung einer erfindungsgemäßen Abgasbehandlungsvorrichtung,
- Figur 2: eine perspektivische Ansicht auf einen erfindungsgemäßen Halter mit Heizscheibe,
- Figur 3: eine Draufsicht bzw. Stirnansicht auf einen erfindungsgemäßen Halter mit dahinter liegender Heizscheibe,
- Figur 4: eine Schnittansicht gemäß Figur 3,
- Figur 5: eine Detailansicht aus Figur 4 und
- Figur 6: eine alternative Ausgestaltungsvariante einer Heizscheibe, welche zwischen zwei Haltern in Abgasströmungsrichtung angeordnet ist.

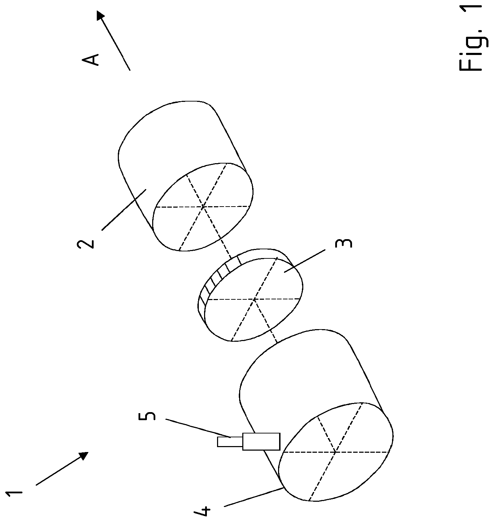

Figur 1 zeigt eine erfindungsgemäße Abgasbehandlungvorrichtung 1 zur Anordnung in einem Abgasstrang eines Kraftfahrzeuges. Hierzu ist ein Katalysator 2 mit in einer in Abgasströmungsrichtung A vorgelagerten Heizscheibe 3 in einem Gehäuse 4 angeordnet. An dem Gehäuse 4 können elektrische Anschlüsse 5 vorhanden sein, so dass die in dem Gehäuse 4 geordnete Heizscheibe 3 mit Strom beaufschlagbar ist.

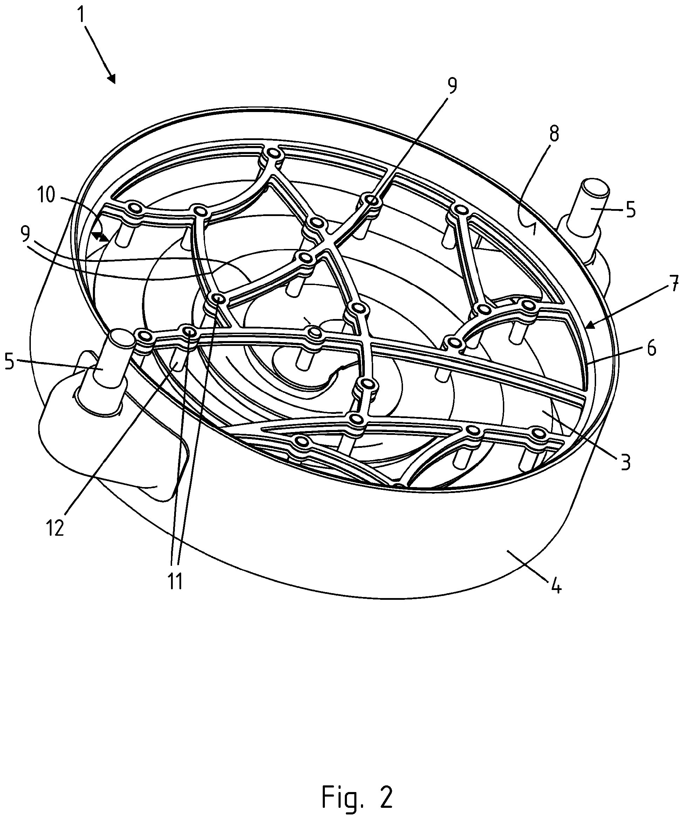

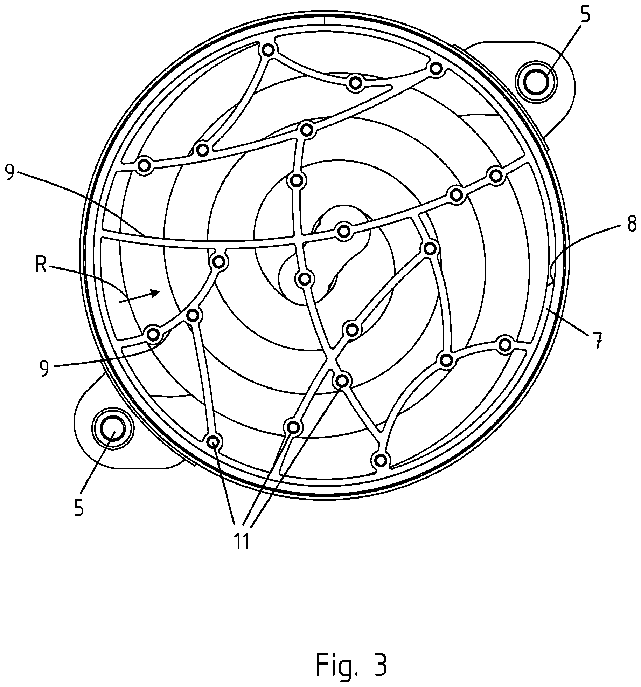

Figur 2 und 3 zeigen eine perspektivische Ansicht sowie eine Stirnansicht auf die Heizscheibe 3 in dem Gehäuse 4. Die Heizscheibe 3 ist in Abgasströmungsrichtung A ein erfindungsgemäßer Halter 6 vorgelagert.

Der Halter 6 ist selbst scheibenförmig mit einer gitterartigen Struktur ausgebildet. Ein außen umlaufender Rahmen bzw. eine außen umlaufende Kontur 7 des Halters 6 ist mit einer Innenmantelfläche 8 des Gehäuses 4 gekoppelt. Dies kann beispielsweise über Löten oder Schweißen erfolgen. Von der außen umlaufenden Kontur 7 bzw. Ring erstrecken sich dann in Radialrichtung R nach innen bezogen einzelne Speichen 9, welche eine gitterartige Struktur ausbilden. Die Speichen 9 selbst verlaufen jeweils gekrümmt bzw. bogenförmig. Die Speichen 9 sind in dieser Ausgestaltungsvariante unregelmäßig zueinander verteilt. Bevorzugt sind jeweils zwei benachbarte oder angrenzende Speichen 9 gegenläufig verlaufend.

Die Querschnittsfläche des Halters 6 überdeckt somit im Wesentlichen die Querschnittsfläche der Innenmantelfläche 8 des Gehäuses 4. Zwischen den Speichen 9 bzw. der gitterartigen Struktur des Halters 6 sind jedoch Aussparungen vorgesehen, so dass bevorzugt mehr als 80, insbesondere mehr als 85, besonders bevorzugt mehr als 90 und ganz besonders bevorzugt mehr als 95 % der Querschnittsfläche zum Durchströmen des Abgases bereitgestellt werden. Mithin wirkt sich der Halter 6 in zu vernachlässigender Weise auf den Strömungswiderstand des durch die Abgasbehandlungsvorrichtung 1 strömenden Abgases aus.

Die Heizscheibe 3 weist einen entsprechenden Abstand 10 zu der Innenmantelfläche 8 des Gehäuses 4 auf. Die thermische Ausdehnung der Heizscheibe 3 führen somit nicht dazu, dass die Heizscheibe 3 in Radialrichtung R einen Kontakt mit dem Gehäuse 4 hätte, so dass es zu einem elektrischen Kurzschluss käme.

Auf den einzelnen Speichen 9 sind sodann Befestigungspunkte 11 angeordnet. Diese Befestigungspunkte 11 weisen einen Abstandhalter 12 auf, welcher insbesondere eine Keramikhülse ist. Über den Abstandhalter 12 ist dann die Heizscheibe 3 mit dem Halter 6 selber gekoppelt. Bevorzugt sind auf einer Speiche 9 drei Befestigungspunkte 11 ausgebildet. Somit kann über den gesamten Verlauf der Speiche 9 und unter Prüfung der thermischen Ausdehnung ein optimales Kompensationsverhältnis von gegebener Haltefunktion und Kompensation der thermischen Ausdehnung erreicht werden.

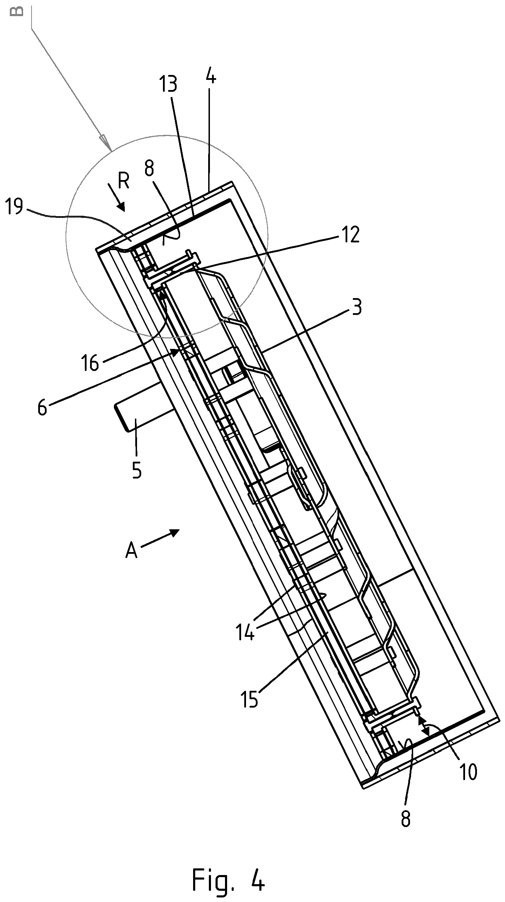

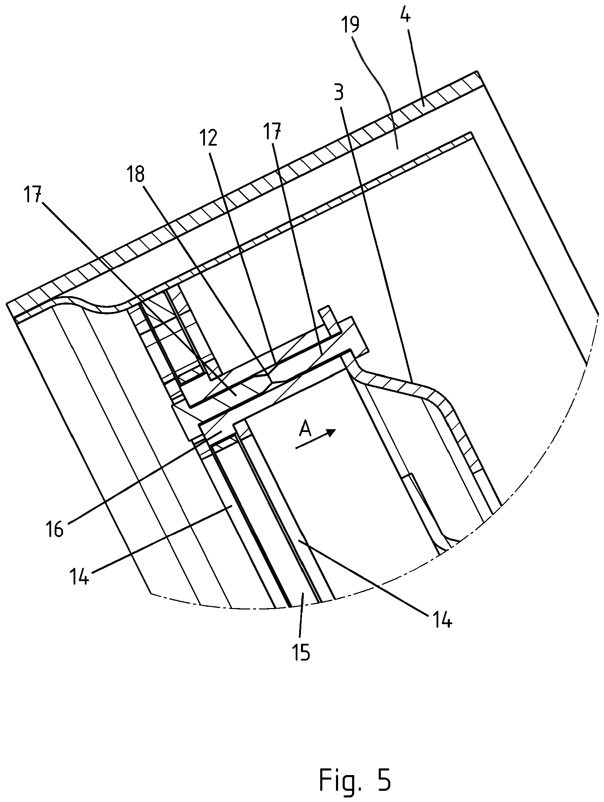

Figur 4 zeigt eine Längsschnittansicht gemäß Figur 3. Hierbei ist zu erkennen, dass ein Einsatzblech 13 in dem Gehäuse 4 selbst angeordnet ist, welches in Radialrichtung R beabstandet zu der eigentlichen Innenmantelfläche 8 des Gehäuses 4 ist. Somit ist der Halter 6 in diesem Falle an der Innenmantelfläche 8 des Einsatzbleches 13 gekoppelt. Es ergibt sich ein Luftspalt 19 zur thermischen Isolierung. Das Einsatzblech 13 ist bevorzugt als Hülse ausgebildet. Was in Figur 4 dargestellt ist, ist, dass der Halter 6 selbst dreilagig ausgebildet ist. Dieser weist zwei in Axialrichtung außenliegende Haltebleche 14 auf sowie ein der Mitte liegende Distanzblech 15. Hierdurch wird folgender erfindungsgemäßer Effekt erreicht. Die Abstandhalter 12 in Form von Keramikhülsen weisen einen oben liegenden Bund 16 auf. Der Bund 16 wird in eine entsprechende Öffnung des Distanzbleches 15 angeordnet und sodann durch einen in Abgasströmungsrichtung A vor- und nachgelagertes Halteblech formschlüssig lagefixiert. Damit ist der jeweilige Abstandhalter 12 bzw. die jeweilige Keramikhülse an dem Halter 6 formschlüssig lagefixiert. Die einzelnen Lagen können untereinander stoffschlüssig gekoppelt sein. Insbesondere wird dies in der Vergrößerungsansicht gemäß Figur 5 nochmals deutlich. Nunmehr wird dann die Heizscheibe 3 mit einem Befestigungsstift 17 bzw. einem Bolzen formschlüssig an ein axiales Ende eines Abstandhalters 12 angelegt und über den Befestigungsstift 17 formschlüssig lagefixiert. Hier werden von zwei Seiten Befestigungsstifte 17 eingesetzt, welche in einem mittleren Koppelpunkt 18, beispielsweise durch Widerstandspunktschweißen miteinander gekoppelt sind. Der Befestigungsstift 16 auf Seiten des Halters 6 hat ausschließlich Anlagenkontakt an dem Abstandhalter 12, welche elektrische isoliert ist. Somit kommt keine stromleitende Verbindung von Heizscheibe 3 zu Abstandhalter 12 zustande.

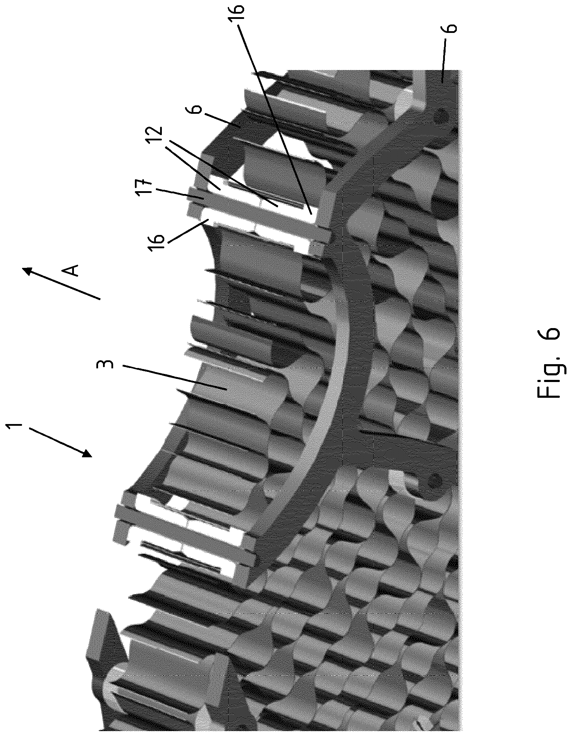

Figur 6 zeigt eine Schnittansicht durch eine weitere Ausgestaltungsvariante. Hier ist in Abgasströmungsrichtung 1 ein Halter 6 der Heizscheibe 3 vorgeschaltet und ein weiterer Halter 6 der Heizscheibe nachgeschaltet. Die Heizscheibe 3 selbst ist durch wellenförmig ausgebildete Blechlagen ausgebildet. In Draufsicht bzw. in Sicht der Abgasströmung ergibt sich somit eine wabenartige Struktur. Durch die vor- und nachgelagerten Halter 6 wird diese wabenförmige Struktur auch in Radialrichtung R mit Festigkeit ausgestattet. Es dann wiederum Abstandhalter 12 zwischen den Haltern 6 angeordnet. Auf den Abstandhaltern 12 selber ist dann die Heizscheibe 3 mit einem jeweils axialen Abstand 10 angeordnet. Ein Befestigungsstift 17 durchgreift die Abstandhalter 12 und koppelt die gegenüberliegenden Halter 6 formschlüssig. Der Befestigungsstift 17 kann dann mit den Haltern 6 jeweils beispielsweise punktgeschweißt oder verlötet werden. Die Abstandshalter 12 weisen jeweils einen Bund 16 auf, so dass die Heizscheibe 3 zwischen den Bunden 16 formschlüssig lagefixiert ist und damit insbesondere elektrisch isoliert von den Haltern 6 in der Abgasbehandlungsvorrichtung angeordnet ist.

### Bezugszeichen:

- 1 -: Abgasbehandlungsvorrichtung
- 2 -: Katalysator
- 3 -: Heizscheibe
- 4 -: Gehäuse
- 5 -: elektrischer Anschluss
- 6 -: Halter
- 7 -: Rahmen/Kontur
- 8 -: Innenmantelfläche zu 4
- 9 -: Speiche
- 10 -: Abstand
- 11 -: Befestigungspunkt
- 12 -: Abstandhalter
- 13 -: Einsatzblech
- 14 -: Halterblech
- 15 -: Distanzblech
- 16 -: Bund
- 17 -: Befestigungsstift
- 18 -: Koppelpunkt
- 19 -: Luftspalt

- R -: Radialrichtung
- A -: Abgasströmungsrichtung

## Patentansprüche

1. Abgasbehandlungsvorrichtung (1) zur Anordnung in einem Abgasstrang eines Kraftfahrzeuges, aufweisend eine Heizscheibe (3), welche einer Abgasnachbehandlungskomponente, insbesondere einem Katalysator (2) zugeordnet ist, wobei die Heizscheibe (3) durch ein flächiges Heizelement und einen mit diesem gekoppelten Halter (6) ausgebildet ist, **dadurch gekennzeichnet, dass** der Halter (6) sich über die Querschnittsfläche des Heizelementes erstreckt und der Halter (6) selbst als flächiges, scheibenförmiges Element mit einer gitterartigen Struktur ausgebildet ist, wobei der Halter (6) in einem Gehäuse (4) der Abgasnachbehandlungskomponente mit einer Innenmantelfläche (8) gekoppelt ist, wobei der Halter (6) radial umlaufend größer ausgebildet ist als das Heizelement und eine gitterartige Struktur des Halters (6) durch unregelmäßig miteinander verbundene bogenförmige Speichen (9) ausgebildet ist, wobei die Heizscheibe (3) über Befestigungspunkte (11) mit dem Halter (6) gekoppelt ist, wobei die Speichen (9), bezogen auf den gesamten Querschnitt des Gehäuses (4) der Abgasnachbehandlungskomponente weniger als 20 % der Querschnittsfläche bedecken.

2. Abgasbehandlungsvorrichtung (1) nach Anspruch 1, **dadurch gekennzeichnet, dass** der Halter (6) aus einem metallischen Werkstoff ausgebildet ist, insbesondere als Stanzteil oder ausgeschnitten.

3. Abgasbehandlungsvorrichtung (1) nach Anspruch 1 oder 2, **dadurch gekennzeichnet, dass** zwei benachbarte bogenförmige Speichen (9) gegenläufige Bogenformen aufweisen.

4. Abgasbehandlungsvorrichtung (1) nach einem der vorangehenden Ansprüche, **dadurch gekennzeichnet, dass** an einer bogenförmigen Speiche (9) mindestens ein, bevorzugt zwei, ganz besonders bevorzugt drei Befestigungspunkte (11) zur Koppelung mit dem Heizelement vorgesehen sind.

5. Abgasbehandlungsvorrichtung (1) nach einem der vorangehenden Ansprüche, **dadurch gekennzeichnet, dass** das Heizelement eine wabenartige Struktur aufweist und insbesondere als elektrisch betriebenes Heizelement ausgebildet ist.

6. Abgasbehandlungsvorrichtung (1) nach einem der vorangehenden Ansprüche, **dadurch gekennzeichnet, dass** das Heizelement aus gewelltem Folienwerkstoff ausgebildet ist oder dass ein Heizleiter des Heizelementes aus einem Lochblech oder Drahtgeflecht ausgebildet ist, wobei das Lochblech bzw. Drahtgeflecht bevorzugt spiralförmig gewickelt ist.

7. Abgasbehandlungsvorrichtung (1) nach einem der vorangehenden Ansprüche, **dadurch gekennzeichnet, dass** zwischen Heizelement und Halter (6) elektrisch isolierende, thermisch resistente Koppelungsmittel angeordnet sind, insbesondere Keramikbuchsen.

8. Abgasbehandlungsvorrichtung (1) nach einem der vorangehenden Ansprüche, **dadurch gekennzeichnet, dass** zwei Halter (6) das Heizelement sandwichartig zwischen sich aufnehmen.

9. Abgasbehandlungsvorrichtung (1) nach einem der vorangehenden Ansprüche, **dadurch gekennzeichnet, dass** als Koppelungsmittel eine Abstandsbuchse ausgebildet ist, sowie ein die Abstandsbuchse durchgreifender Stift, wobei die Abstandsbuchse elektrisch isoliert ausgebildet ist.

10. Abgasbehandlungsvorrichtung (1) nach Anspruch 9, **dadurch gekennzeichnet, dass** in einem Koppelungsmittel zwei gegenläufig aufeinander zu zeigende Bestigungsstifte (17) angeordnet sind, welche an ihren Spitzen miteinander gekoppelt sind und bevorzugt stehen die Befestigungsstifte (17) unter Zugspannung.

11. Abgasbehandlungsvorrichtung (1) nach einem der vorangehenden Ansprüche, **dadurch gekennzeichnet, dass** der Halter (6) mit einer außen zumindest abschnittsweise, insbesondere vollständig umlaufenden Kontur (7) in einem Gehäuse (4) der Abgasnachbehandlungskomponente gekoppelt ist, wobei die Speichen (9) dann einstückig und werkstoffeinheitlich von der Kontur (7) radial orientiert nach innen angebunden sind und untereinander gekoppelt sind.

## Claims

1. Exhaust gas treatment device (1) for arrangement in an exhaust system of a motor vehicle, having a heating disc (3) which is assigned to an exhaust gas aftertreatment component, in particular a catalyst (2), wherein the heating disc (3) is formed by a flat heating element and a holder (6) coupled thereto, **characterized in that** the holder (6) extends over the cross-sectional area of the heating element and the holder (6) itself is configured as a flat, disc-shaped element with a grid-like structure, wherein the holder (6) is coupled in a housing (4) of the exhaust gas aftertreatment component with an inner circumferential surface (8), wherein the holder (6) is radially larger than the heating element and a grid-like structure of the holder (6) is formed by irregularly interconnected arcuate spokes (9), wherein the heating disc (3) is coupled to the holder (6) via fastening points (11), wherein the spokes (9) cover less than 20 % of the cross-sectional area relative to the entire cross-section of the housing (4) of the exhaust gas aftertreatment component.

2. The exhaust gas treatment device (1) according to claim 1, **characterized in that** the holder (6) is formed from a metallic material, in particular as a stamped part or cut out.

3. The exhaust gas treatment device (1) according to claim 1 or 2, **characterized in that** two adjacent arcuate spokes (9) have opposed arcuate shapes.

4. The exhaust gas treatment device (1) according to any one of the preceding claims, **characterized in that** at least one, preferably two, most preferably three fastening points (11) for coupling to the heating element are provided on an arcuate spoke (9).

5. The exhaust gas treatment device (1) according to any one of the preceding claims, **characterized in that** the heating element has a honeycomb structure and is configured in particular as an electrically operated heating element.

6. The exhaust gas treatment device (1) according to any one of the preceding claims, **characterized in that** the heating element is formed from corrugated foil material or that a heating conductor of the heating element is formed from a perforated sheet or wire mesh, wherein the perforated sheet or wire mesh is preferably wound in a spiral shape.

7. The exhaust gas treatment device (1) according to any one of the preceding claims, **characterized in that** electrically insulating, thermally resistant coupling means, in particular ceramic bushings, are arranged between the heating element and the holder (6).

8. The exhaust gas treatment device (1) according to any one of the preceding claims, **characterized in that** two holders (6) sandwich the heating element between them.

9. The exhaust gas treatment device (1) according to any one of the preceding claims, **characterized in that** a spacer bushing is configured as the coupling means, and a pin passing through the spacer bushing, wherein the spacer bushing is configured to be electrically insulated.

10. The exhaust gas treatment device (1) according to claim 9, **characterized in that** two fastening pins (17) pointing in opposite directions towards each other are arranged in a coupling means, which are coupled to each other at their tips and preferably the fastening pins (17) are under tensile stress.

11. The exhaust gas treatment device (1) according to any one of the preceding claims, **characterized in that** the holder (6) is coupled to an externally at least partially, in particular completely circumferential contour (7) in a housing (4) of the exhaust gas aftertreatment component, wherein the spokes (9) are then, in an integral manner and of the same material, connected from the contour (7) radially oriented inwards and are coupled to one another.

## Revendications

1. Dispositif de traitement des gaz d'échappement (1) destiné à être disposé dans une ligne de gaz d'échappement d'un véhicule à moteur, présentant un disque chauffant (3), qui est associé à un composant de post-traitement des gaz d'échappement, en particulier à un catalyseur (2), dans lequel le disque chauffant (3) est réalisé par un élément chauffant plat et un support (6) couplé à celui-ci, **caractérisé en ce que** le support (6) s'étend sur la surface de section transversale de l'élément chauffant et le support (6) est lui-même réalisé en tant qu'élément plat en forme de disque avec une structure de type grille, dans lequel le support (6) est couplé à une surface de gaine intérieure (8) dans un boîtier (4) du composant de post-traitement des gaz d'échappement, dans lequel le support (6) est réalisé en périphérie radialement plus grand que l'élément chauffant et une structure de type grille du support (6) est réalisée par des rayons en forme d'arc (9) reliés entre eux de manière irrégulière, dans lequel le disque chauffant (3) est couplé au support (6) par l'intermédiaire de points de fixation (11), dans lequel les rayons (9), par rapport à la section transversale totale du boîtier (4) du composant de post-traitement des gaz d'échappement, couvrent moins de 20 % de la surface de section transversale.

2. Dispositif de traitement des gaz d'échappement (1) selon la revendication 1, **caractérisé en ce que** le support (6) est réalisé à partir d'un matériau métallique, en particulier en tant que pièce estampée ou découpée.

3. Dispositif de traitement des gaz d'échappement (1) selon la revendication 1 ou la revendication 2, **caractérisé en ce que** deux rayons (9) en forme d'arc adjacents présentent des formes d'arc opposées.

4. Dispositif de traitement des gaz d'échappement (1) selon l'une quelconque des revendications précédentes, **caractérisé en ce qu'**au moins un, de manière préférée deux, de manière très particulièrement préférée trois points de fixation (11) sont prévus sur un rayon (9) en forme d'arc pour le couplage avec l'élément chauffant.

5. Dispositif de traitement des gaz d'échappement (1) selon l'une quelconque des revendications précédentes, **caractérisé en ce que** l'élément chauffant présente une structure alvéolaire et est réalisé en particulier comme un élément chauffant à commande électrique.

6. Dispositif de traitement des gaz d'échappement (1) selon l'une quelconque des revendications précédentes, **caractérisé en ce que** l'élément chauffant est réalisé à partir d'un matériau de film ondulé ou qu'un conducteur chauffant de l'élément chauffant est réalisé à partir d'une tôle perforée ou d'une tresse métallique, dans lequel la tôle perforée ou la tresse métallique est de manière préférée enroulée en spirale.

7. Dispositif de traitement des gaz d'échappement (1) selon l'une quelconque des revendications précédentes, **caractérisé en ce que** des moyens de couplage électriquement isolants, résistants à la chaleur, en particulier des douilles en céramique, sont disposés entre l'élément chauffant et le support (6).

8. Dispositif de traitement des gaz d'échappement (1) selon l'une quelconque des revendications précédentes, **caractérisé en ce que** deux supports (6) reçoivent entre eux l'élément chauffant en sandwich.

9. Dispositif de traitement des gaz d'échappement (1) selon l'une quelconque des revendications précédentes, **caractérisé en ce qu'**une douille d'écartement est réalisée en tant que moyen de couplage, ainsi qu'une goupille passant à travers la douille d'écartement, dans lequel la douille d'écartement est réalisée de manière isolée électriquement.

10. Dispositif de traitement des gaz d'échappement (1) selon la revendication 9, **caractérisé en ce que** deux goupilles de fixation (17) à pointer l'une vers l'autre en sens opposé sont disposées dans un moyen de couplage, lesquelles sont couplées entre elles sur leurs pointes et les goupilles de fixation (17) sont de manière préférée sous tension de traction.

11. Dispositif de traitement des gaz d'échappement (1) selon l'une quelconque des revendications précédentes, **caractérisé en ce que** le support (6) est couplé à un contour (7) au moins par endroits côté extérieur, en particulier totalement périphérique dans un boîtier (4) du composant de post-traitement des gaz d'échappement, dans lequel les rayons (9) sont alors attachés vers l'intérieur de manière orientée radialement depuis le contour (7) d'une seule pièce et de manière homogène en matériau et sont couplés entre eux.
